# FASCICULE DE BREVET EUROPEEN

(11) **EP 0 705 777 B1**
(45) Date de publication et mention de la délivrance du brevet: **02.09.1998**
(21) Numéro de dépôt: 95490031.2
(22) Date de dépôt: 06.10.1995
(51) Int. Cl.: B65G 51/03

(54) **Convoyeur pneumatique pour récipients, permettant de minimiser le degré de contamination bactérienne de ces récipients**
Pneumatischer Förderer für Behälter zur Minimierung bakterieller Verunreinigung dieser Behälter
Pneumatic conveyor for containers, to minimize bacterial contamination of the containers

(30) Priorité: 07.10.1994 FR 9412190
(43) Date de publication de la demande: 10.04.1996
(73) Titulaire: Netra Systems, 59700 Marcq en Baroeul (FR)
(72) Inventeur: Declercq, Philippe, F-59110 La Madeleine (FR); Trenel, Joel, F-59493 Villeneuve d'Ascq (FR)
(74) Mandataire: Hénnion, Jean-Claude

(56) Documents cités:
- WO-A-90/10587
- DE-U- 8 807 146
- GB-A- 2 092 981

## Description

La présente invention conceme le transport de récipients sous l'action de jets d'air, les récipients étant supportés et guidés, lors de leur mise en mouvement, par l'intermédiaire d'une protubérance de leur col. Elle a plus particulièrement pour objet un convoyeur pneumatique pour récipients, qui est conçu en sorte de limiter le phénomène de contamination bactérienne de l'intérieur de ces récipients, lors de leur transport. L'invention trouve particulièrement son application dans le domaine de l'acheminement de bouteilles vides ouvertes, jusqu'à une machine d'embouteillage.

Dans le domaine de l'embouteillage de bouteilles vides, il est connu d'utiliser des convoyeurs pneumatiques, dans lesquels les bouteilles vides sont supportées et guidées dans un canal de guidage, par l'intermédiaire d'une protubérance de leur col, et sont mises en mouvement par train entier de bouteilles, sous l'action de jets d'air répartis sur toute la longueur du parcours des bouteilles.

Il a par exemple été décrit dans la demande de brevet européen EP 070 931, ou encore dans le brevet américain correspondant US.4.284.37O, un convoyeur pneumatique de bouteilles vides , dont les moyens de transfert par jets d'air consistent en un caisson de soufflage à section rectangulaire, à l'intérieur duquel est injecté de l'air. La face inférieure de ce caisson de soufflage comporte un décrochement intérieur central, qui est équipé de moyens pour le guidage des bouteilles par l'intermédiaire d'une protubérance de leur col, et possède au niveau de ce décrochement, une pluralité d'ouvertures permettant de diriger l'air injecté dans le caisson de soufflage sur le goulot des bouteilles, au-dessus de la protubérance de leur col. Dans le but d'améliorer le convoyage de ces bouteilles , ce convoyeur pneumatique comporte en outre deux parois latérales, qui sont fixées de part et d'autre du canal de guidage des bouteilles, et qui permettent de canaliser l'air résiduel sur le corps de ces bouteilles.

Après avoir effectué des essais sur ce type de convoyeur pour transporter les bouteilles en polyéthylène, la demanderesse a constaté que l'utilisation de parois latérales trop rapprochées provoquait une canalisation de l'air entre ces deux parois , qui était en réalité trop importante et qui contrairement à l'enseignement des deux documents précités, nuisait à un bon convoyage des bouteilles. En effet, cet air canalisé entre les deux parois exerce sur le corps des bouteilles des forces de pression dont la résultante est appliquée au-dessous du point de pivotement de ces bouteilles, c'est-à-dire au-dessous de la protubérance de leur col, ce qui a tendance à les faire basculer hors de leur position verticale et à les coincer dans le convoyeur.

Un autre inconvénient de ce type de convoyeur réside dans le phénomène de contamination bactérienne à l'intérieur de chaque bouteille vide, lors de son transport. Jusqu'à présent, il a toujours été considéré que ce phénomène de contamination provenait de l'air qui était injecté au niveau du goulot des récipients. Une première solution pour essayer de palier ce problème a donc consisté à filtrer cet air injecté, préalablement à son introduction dans le caisson de soufflage, afin d'en garantir la teneur en bactéries; une deuxième solution, préconisée dans la demande de brevet européen EP.526.963, a été d'injecter cet air, non plus au-dessus, mais au-dessous de la protubérance de leur col, afin que l'air injecté ne puisse pas pénétrer dans les bouteilles.

Après avoir mené des essais, la demanderesse a constaté que ces deux solutions n'étaient pas satisfaisantes, et que , dans les deux cas, le degré de contamination à l'intérieur des récipients ne pouvait être garanti. Au cours de ces essais, la demanderesse a en outre mis en évidence que l'air, qui était injecté sur les bouteilles pour permettre leur transfert pneumatique, induisait à la périphérie de ces bouteilles, un air ascendant à vitesse élevée qui entraînait avec lui, jusque dans la région du goulot des bouteilles, les poussières et bactéries de l'air environnant le convoyeur. Partant de ce constat majeur, la demanderesse en a conclu que le phénomène de contamination des bouteilles, n'était pas du principalement à l'air qui était injecté directement sur ces bouteilles , contrairement à ce qui avait été jusqu'à présent considéré, mais que cette contamination provenait en majeure partie des poussières et bactéries de l'atmosphère dans laquelle était placé le convoyeur.

En utilisant un convoyeur pneumatique à parois latérales, tel que celui décrit dans le document EP 070 931, la demanderesse a constaté qu'en présence de bouteilles on limitait l'air induit ascendant entre les deux parois latérales. Cependant, il convient de remarquer qu'en pratique l'injection d'air dans le caisson de soufflage pour le transfert pneumatique des bouteilles est réalisée de manière continuelle, même lorsque la machine de production de bouteilles en amont de ce convoyeur ou de la machine d'embouteillage située en aval sont arrêtées. Pour la création du flux d'air à l'intérieur du caisson de soufflage, les convoyeurs pneumatiques actuels utilisent d'ailleurs des ventilateurs à deux vitesses, une vitesse basse utilisée notamment la nuit lorsque la production de bouteilles est arrêtée, et une vitesse haute, lorsque l'installation d'embouteillage est en régime normal de production. En outre, même lorsque l'installation d'embouteillage fonctionne en régime normal, les trains de bouteilles véhiculés par les convoyeurs pneumatiques ne sont pas continus. Il en résulte, que même dans le cas où l'on utilise un convoyeur pneumatique à parois latérales, on favorise la création d'un air induit ascendant qui vient, en l'absence de bouteilles, déposer les poussières et bactéries de l'air environnant le convoyeur, dans le canal de guidage des bouteilles. En fonction du degré de propreté de cet air environnant, on obtient donc un encrassement à plus ou moins long terme de ce canal de guidage. Cet encrassement combiné à l'action de l'air issu du caisson de soufflage entraîne une salissure préjudiciable de l'intérieur des bouteilles. Par conséquent, dans le cas de convoyeurs pneumatiques à parois latérales, pour éviter la contamination bactérienne des bouteilles , il est impératif de nettoyer fréquemment le canal de guidage, qui par ailleurs n'est pas facilement accessible du fait de la présence des deux parois latérales. Ces opérations de nettoyage sont donc délicates, et entraînent un surcoût de maintenance du convoyeur.

Enfin, pour qu'en présence de bouteilles, le flux d'air induit ascendant soit suffisamment faible, il est impératif que les deux parois latérales soient fixées au plus près des bouteilles, c'est à dire soient le plus proche possible l'une de l'autre. Cette contrainte pour limiter la création du flux d'air est donc incompatible avec celle du bon convoyage des bouteilles, l'amélioration de l'une de ces deux contraintes se faisant au détriment de l'autre.

Dans le but d'éviter la création du flux d'air induit ascendant même en l'absence de bouteille, la demanderesse a essayé de réaliser, autour des récipients, un capotage fermé, ou présentant à sa base une ouverture minimale. Cependant, de la même manière que pour les parois latérales du convoyeur des documents EP 070 931 ou US.4.284.37O, ce capotage entraînait une canalisation de l'air préjudiciable au bon convoyage des récipients. Pour ne pas perturber le convoyage de ces récipients, il aurait fallu réaliser un capotage volumineux, qui était incompatible avec les contraintes industrielles d'encombrement et de coût.

Le but de la présente invention est donc de proposer un convoyeur pneumatique pour récipients, qui d'une part permet de limiter la contamination de l'intérieur des récipients et l'encrassement du canal de guidage occasionnés par le flux d'air induit ascendant, tout en ne dégradant pas la convoyabilité des récipients, et qui d'autre part n'occasionne pas un surcoût excessif ou un encombrement supplémentaire au niveau de la réalisation du convoyeur.

Ce but est parfaitement atteint par le convoyeur de l'invention, qui de manière connue comporte un canal de guidage apte à supporter les récipients par la protubérance de leur col, des moyens de transfert par jets d'air des récipients le long du canal de guidage , et deux parois latérales qui sont fixées de part et d'autre du canal de guidage, et entre lesquelles peuvent passer les récipients.

De manière caractéristique selon l'invention, le convoyeur pneumatique comprend en outre des moyens permettant d'injecter, entre le canal de guidage et chaque paroi latérale, un flux d'air qui est continu sur toute la longueur de ce canal ou une pluralité de jets d'air qui sont répartis sur toute la longueur de ce canal ; chaque flux ou jet d'air est orienté en direction de la paroi latérale la plus proche, en sorte d'obtenir une déviation de l'air ascendant induit par l'action des moyens de transfert.

Dans le convoyeur de l'invention, l'injection d'air supplémentaire en direction de chaque paroi latérale permet de créer, dans la région du canal de guidage du convoyeur, une zone protégée contre les poussières et bactéries de l'air environnant le convoyeur, en empêchant au moins la plus grande partie de l'air induit ascendant d'atteindre le canal de guidage. Bien entendu la fiabilité de cette protection dépendra notamment de la vitesse de cet air injecté , et dans le cas de jets d'air répartis sur toute la longueur du canal de guidage, du nombre et de la répartition de ces jets d'air. Il est important de remarquer que dans le convoyeur de l'invention, il est possible de régler l'écartement des deux parois latérales à une valeur qui est suffisante pour ne pas perturber le convoyage des récipients, sans que cela se fasse au détriment de la déviation de l'air induit ascendant. Ce convoyeur présente donc l'avantage de dissocier les deux contraintes de convoyage et de propreté des récipients. C'est donc le mérite de la demanderesse d'avoir dans un premier temps mis en évidence l'existence et l'influence de l'air induit ascendant sur la contamination des récipients et dans un deuxième temps d'avoir trouver une solution qui permette de dissocier les deux contraintes de convoyage et de propreté des récipients, non pas en cherchant à supprimer le flux d'air induit ascendant, mais en le déviant de sa trajectoire.

De préférence, l'injection d'air pour la déviation de l'air induit ascendant est réalisée dans une direction sensiblement orthogonale à chaque paroi latérale.

Selon un mode préféré de réalisation, permettant d'obtenir une meilleure fiabilité au niveau de la propreté du canal de guidage et de l'intérieur des récipients, le convoyeur comprend en outre entre ce canal de guidage et chaque paroi latérale, un déflecteur qui fait toute la longueur du convoyeur et qui est incliné par rapport à la verticale , en sorte de délimiter avec la paroi latérale la plus proche , un passage qui s'élargit vers le haut. Dans ce mode préféré de réalisation, l'air induit ascendant est canalisé entre chaque paroi latérale et le déflecteur correspondant, à la surface de ce déflecteur. Lorsqu'il arrive au contact du flux d'air de déviation, il est redirigé en direction de la paroi latérale, et la majeure partie de cet air induit est évacuée vers le bas le long de cette paroi latérale.

Dans un premier mode particulier de réalisation, le flux d'air utilisé par les moyens de transfert par jets d'air des récipients et le flux d'air utilisé pour la déviation de l'air induit ascendant seront créés indépendamment l'un de l'autre. Il est ainsi possible de régler la vitesse du flux d'air pour la déviation de l'air induit ascendant indépendamment de la vitesse de transfert des récipients.

Dans un deuxième mode particulier, qui présente le principal avantage d'être simple à réaliser, le convoyeur sera du type comportant un caisson de soufflage avec un décrochement intérieur délimitant le canal de guidage et équipé de moyens pour le guidage des récipients par l'intermédiaire de leur col. Dans ce cas, la paroi inférieure de ce caisson de soufflage comporte avantageusement, de part et d'autre de son décrochement intérieur, une fente longitudinale ou une pluralité d'ouvertures concues pour prélever une partie de l'air injecté dans le caisson de soufflage et le diriger en direction de la paroi latérale la plus proche. Dans ce mode particulier de réalisation, l'air injecté dans le caisson de soufflage sert à la fois à faire progresser les récipients à l'intérieur du convoyeur, et à créer une zone de déviation de l'air induit ascendant de part et d'autre du parcours de ces récipients.

Avantageusement, afin de ne pas perturber le convoyage des récipients, l'écartement entre les deux parois latérales sera supérieur à 250mm, et de préférence de l'ordre de 45Omm.

Les caractéristiques et avantages de l'invention ressortiront plus clairement de la description suivante, qui est faite à titre d'exemple non limitatif, et en référence à la figure unique annexée, laquelle représente une vue schématique en coupe d'une variante préférée de réalisation d'un convoyeur de l'invention.

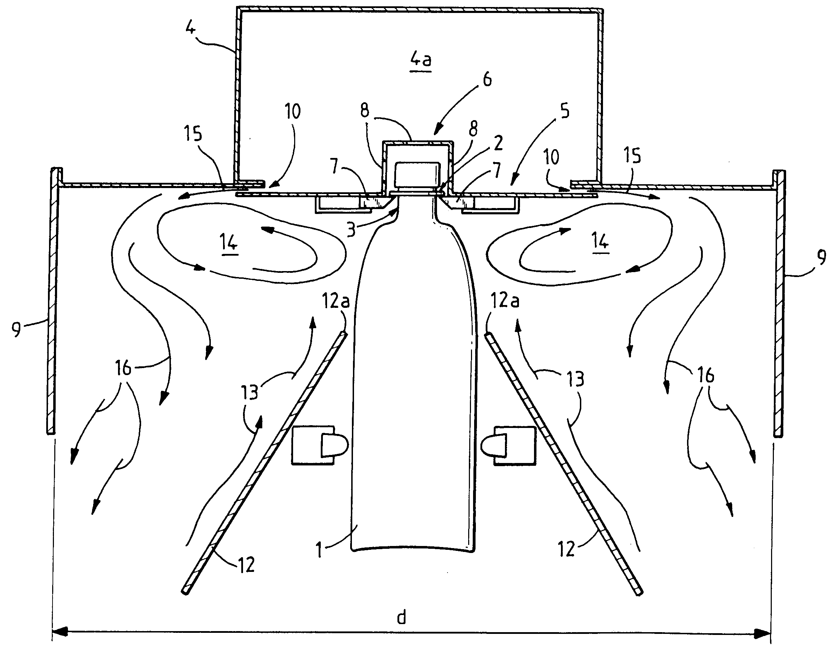

Le convoyeur représenté à la figure 1 est utilisé pour effectuer le transport pneumatique de bouteilles vides 1 réalisées en polyéthylène, et comportant une protubérance 2 au niveau de leur col 3. Il trouve particulièrement son application dans une chaîne d'embouteillage, en permettant l'acheminement de bouteilles par trains entiers, depuis la machine de production de bouteilles jusqu'à la machine d'embouteillage.

L'élément principal de ce convoyeur pour le transfert pneumatique des bouteilles 1 est un caisson de soufflage 4, qui est relié, de manière connue , à des moyens de ventilation (non représentés), permettant de créer, dans la cavité intérieure 4a du caisson, un flux d'air longitudinal qui est de préférence filtré afin de garantir son degré de propreté. La paroi inférieure 5 de ce caisson de soufflage 4 comporte un décrochement intérieur 6, qui est centré par rapport à la cavité intérieure 4a du caisson. Au niveau de ce décrochement 6, sont fixés des guides sous-col 7, qui permettent de guider en translation et de supporter les bouteilles 1 par l'intermédiaire de la protubérance 2 de leur col 3. Le décrochement 6 est en outre équipé d'ouvertures 8, qui sont réparties régulièrement sur toute la longueur du caisson de soufflage 4, et qui permettent de prélever une partie du flux d'air propre injecté dans la cavité intérieure 4a de ce caisson de soufflage 4. Chaque ouverture 8 crée un jet d'air, qui vient en contact avec la partie du col 3 de chaque bouteille 1 située au-dessus de la protubérance 2, et qui est orienté sensiblement dans la direction de transport des bouteilles 1, c'est à dire dans une direction orthogonale au plan de coupe de la figure 1. Le décrochement 6 et les guides sous-col 7 constituent donc à la fois un canal de guidage des bouteilles 1 et un canal de soufflage pour le transfert pneumatique de ces bouteilles.

Conformément à l'invention, ce convoyeur comprend en outre deux parois latérales 9 qui sont en l'occurrence fixées verticalement de part et d'autre du caisson de soufflage 4, et qui s'étendent sur toute la longueur de ce caisson. De plus, la paroi inférieure 5 du caisson de soufflage 4 comporte, de part et d'autre du décrochement 6, une pluralité d'ouvertures 1O qui sont régulièrement réparties sur toute la longueur du caisson de soufflage 4 , et qui permettent de prélever une partie de l'air injecté dans le caisson de soufflage 4, et de créer une pluralité de jets d'air latéraux 15 orientant le flux résultant en direction de la paroi latérale 9 la plus proche. Dans l'exemple illustré, ces jets d'air 15 sont sensiblement orthogonaux aux parois latérales 9. Le positionnement de ces ouvertures 1O selon l'axe longitudinal du caisson de soufflage 4 pourra par exemple être réalisé avec un pas identique à celui des ouvertures 8. Il est également envisageable dans le cadre de l'invention de remplacer les ouvertures 10 par deux fentes longitudinales s'étendant de part et d'autre du décrochement 6 sur toute la longueur du caisson de soufflage 4. Cette deuxième solution permet de créer deux flux d'air latéraux continus, et nécessite de ce fait un débit d'air plus important à l'intérieur du caisson de soufflage 4.

Conformément au mode préféré de réalisation de l'invention, le convoyeur comporte en outre deux déflecteurs 12, qui sont fixés sur toute la longueur du convoyeur, respectivement entre la zone de passage des bouteilles 1 et chaque paroi latérale 9. Ces deux déflecteurs sont en outre inclinés dans des directions convergentes l'une par rapport à l'autre, en sorte de délimiter chacun avec la paroi 9 la plus proche un passage qui s'élargit vers le haut.

Le flux d'air qui est injecté sur le col des bouteilles 1 dans le décrochement 6 induit un flux d'air ascendant à grande vitesse, qui véhicule les poussières et bactéries de l'air extérieur environnant le convoyeur. Grâce à la présence des déflecteurs inclinés 12, cet air induit ascendant , qui est symbolisé sur la figure 1 par les deux flèches référencées 13, est canalisé entre chaque déflecteur 12 et la paroi latérale 9 correspondante, en se propageant à la surface de chacun de ces deux déflecteurs 12. Au niveau du bord supérieur 12a de chaque déflecteur, l'air induit ascendant est dévié, en direction de la paroi latérale 9 la plus proche, sous l'influence des jets d'air latéraux 15 issus des ouvertures 1O. Plus précisément, de part et d'autre du parcours des bouteilles 1, il se crée, sous les effets conjugués de l'air induit ascendant et des jets d'air 15 canalisés latéralement par les parois 9, deux tourbillons 14 longitudinaux, qui sont chacun confinés dans l'espace situé entre le bord supérieur 12a d'un déflecteur 12 et la paroi inférieure 5 du caisson de soufflage 4. Ces deux tourbillons 14 forment de part et d'autre du décrochement 6, et dans la région du col des bouteilles 1, une zone de déviation de l'air induit ascendant 13, lequel se trouve redirigé en sens inverse vers le bas du convoyeur en étant canalisé par les parois latérales 9 (flèches 16). Ainsi, au moins la plus grande partie des poussières et bactéries transportées par cet air induit ascendant n'atteint pas le décrochement 6 ou le col des bouteilles 1 et est renvoyée à l'extérieur du convoyeur.

Les parois latérales 9 doivent être suffisamment éloignées l'une de l'autre, pour ne pas canaliser entre elles un flux d'air longitudinal susceptible de perturber le convoyage des bouteilles 1. Elles doivent cependant être suffisamment proches des ouvertures 10 et du déflecteur 12 correspondant pour que puissent se créer les tourbillons 14. Cet éloignement maximal pour l'apparition des tourbillons dépendra principalement de la vitesse des jets d'air 15 à la sortie des ouvertures 10. Dans un exemple précis de réalisation, la vitesse des jets d'air 15 à la sortie des ouvertures 10 étant comprise entre 5 et 8 m/s, la distance d séparant les deux parois latérales 9 valait approximativement 450mm.

Le convoyeur qui vient d'être décrit présente le double avantage, d'une part de préserver les bouteilles 1 et leur canal de guidage contre les poussières et bactéries de l'environnement extérieur du convoyeur, quel que soit le degré de propreté de cet environnement, et d'autre part de ne pas nuire au bon convoyage des bouteilles.

Dans l'exemple particulier qui a été décrit, les jets d'air issus des ouvertures 8 du décrochement 6 viennent directement au contact de la partie du col des bouteilles située au-dessus de leur protubérance 2. Il existe cependant d'autres types de convoyeurs pneumatiques dans lesquels ces jets d'air sont orientés sur la partie des bouteilles située au-dessous de la protubérance 2 de leur col 3. Les jets d'air de ces convoyeurs induisent le même phénomène d'air ascendant à vitesse élevée et posent donc les mêmes problèmes d'encrassement du canal de guidage des bouteilles , ou de contamination de l'intérieur des bouteilles, par les bactéries et les poussières de l'environnement extérieur du convoyeur. L'invention peut donc également être avantageusement appliquée à ce type de convoyeur,et est à la portée de l'homme du métier de transposer la description qui à été faite aux autres types de convoyeurs existants.

Il peut être avantageux dans un autre mode de réalisation du convoyeur de l'invention de dissocier les jets d'air issus des ouvertures 8 et utilisés pour le transfert pneumatique des bouteilles, des jets d'air 15 permettant la déviation du flux d'air induit ascendant. Dans ce cas, les jets d'air 15 ne seront plus issus d'ouvertures 10 pratiquées dans le caisson de soufflage 4, mais seront par exemple issus de buses de soufflage reliées directement à des moyens d'alimentation en air,qui sont indépendants des moyens d'alimentation en air du caisson de soufflage 4. Il est ainsi possible de régler au mieux la vitesse de jets d'air 15 en fonction notamment de l'écartement particulier des parois latérales 9 d'un convoyeur donné, sans perturber la vitesse de transfert des bouteilles. Inversement, on pourra régler la vitesse de transfert des bouteilles, en fonction notamment des cadences des machines situées en amont ou en aval du convoyeur, sans risquer de perturber la déviation de l'air induit ascendant par les jets d'air 15.

## Revendications

1. Convoyeur pneumatique pour récipients dont le col (3) comporte une protubérance (2), ledit convoyeur comportant un canal de guidage (6,7) qui est apte à supporter les récipients par la protubérance de leur col, des moyens de transfert par jets d'air des récipients le long du canal de guidage, et deux parois latérales (9) qui sont fixées de part et d'autre du canal de guidage, et entre lesquelles peuvent passer les récipients, caractérisé en ce qu'il comprend en outre des moyens permettant d'injecter, entre le canal de guidage et chaque paroi latérale, un flux d'air qui est continu sur toute la longueur de ce canal ou une pluralité de jets d'air (15) qui sont répartis sur toute la longueur de ce canal, et en ce que chaque flux ou jet d'air (15) est orienté en direction de la paroi latérale (9) la plus proche, en sorte d'obtenir une déviation de l'air ascendant (13) induit par l'action des moyens de transfert.

2. Convoyeur selon la revendication 1 caractérisé en ce que l'injection d'air pour la déviation de l'air induit ascendant est réalisée dans une direction sensiblement orthogonale à chaque paroi latérale.

3. Convoyeur selon la revendication 1 ou 2 caractérisé en ce qu'il comprend en outre, entre le canal de guidage et chaque paroi latérale, un déflecteur (12) qui fait toute la longueur du convoyeur et qui est incliné par rapport à la verticale en sorte de délimiter avec la paroi latérale (9) la plus proche un passage qui s'élargit vers le haut.

4. Convoyeur selon l'une des revendications 1 à 3 caractérisé en ce que le flux d'air utilisé par les moyens de transfert par jets d'air des récipients et le flux d'air utilisé pour la déviation de l'air induit ascendant sont créés indépendamment l'un de l'autre.

5. Convoyeur selon l'une des revendications 1 à 3 dont les moyens de transfert par jets d'air consistent en un caisson de soufflage (4) à l'intérieur duquel est injecté de l'air, dont la paroi inférieure (5) comporte un décrochement intérieur (6) délimitant le canal de guidage, et équipé de moyens (7) pour le guidage des récipients (1) par l'intermédiaire d'une protubérance (2) de leur col (3), et possède, au niveau de ce décrochement (6), des ouvertures (8) permettant de diriger l'air injecté dans le caisson de soufflage sur les récipients, dans la direction de transport de ces récipients, caractérisé en ce que la paroi inférieure (5) de ce caisson de soufflage (4) comporte en outre, de part et d'autre de son décrochement intérieur (6), une fente longitudinale ou une pluralité d'ouvertures (10) conçues pour prélever une partie de l'air injecté dans le caisson de soufflage (4) et le diriger en direction de la paroi latérale (9) la plus proche.

6. Convoyeur selon l'une des revendications 1 à 5 caractérisé en ce que l'écartement d entre les deux parois latérales (9) est supérieur à 250 mm et de préférence de l'ordre de 450mm.

## Claims

1. Pneumatic conveyor for containers whose necks (3) have protuberances (2), the said conveyor having a guide channel (6, 7) which can support the containers via the protuberance on the neck, means for transferring the containers along the guide channel using jets of air, and two side walls (9) which are fixed one on either side of the guide channel, and between which the containers can pass, characterized in that it further comprises means that allow the injection, between the guide channel and each side wall, of a flow of air which is continuous along the entire length of this channel or a number of jets of air (15) which are distributed along the entire length of this channel, and in that each flow or jet of air (15) is directed towards the nearest side wall (9) so as to deflect the rising air (13) induced by the action of the transfer means.

2. Conveyor according to Claim 1, characterized in that the air used to deflect the upwards induced air is injected in a direction which is more or less orthogonal to each side wall.

3. Conveyor according to Claim 1 or 2, characterized in that it further comprises, between the guide channel and each side wall, a deflector (12) which runs the entire length of the conveyor and which is inclined with respect to the vertical so that it delimits with the nearest side wall (9) a passage which widens at the top.

4. Conveyor according to one of Claims 1 to 3, characterized in that the flow of air used by the means for transferring the containers using jets of air, and the flow of air used to deflect the upwards induced air, are created independently of one another.

5. Conveyor according to one of Claims 1 to 3, in which the transfer means using jets of air consist of a blower cavity (4) into which air is injected, the lower wall (5) of which has an interior indentation (6) de-limiting the guide channel, and equipped with means (7) for guiding the containers (1) via a protuberance (2) on the neck (3), and at this indentation (6) has openings (8) allowing the air injected into the blowing cavity to be directed onto the containers in the direction in which these containers are transported, characterized in that the lower wall (5) of this blowing cavity (4) further comprises, on either side of its internal indentation (6), a longitudinal slit or a number of openings (10) which are designed to draw off some of the air injected into the blowing cavity (4) and direct it towards the nearest side wall (9).

6. Conveyor according to one of Claims 1 to 5, characterized in that the separation d between the two side walls (9) is greater than 250 mm and preferably of the order of 450 mm.

## Patentansprüche

1. Pneumatischer Förderer für Behälter, deren Hals (3) eine Ausstülpung (2) umfaßt, mit:
- einem Führungskanal (6, 7), der geeignet ist, die Behälter an der Ausstülpung ihres Halses zu halten,
- Mitteln zum Transport der Behälter durch Luftstrahlen entlang des Führungskanals und
- zwei Seitenwänden (9), die auf beiden Seiten des Führungskanals befestigt sind und zwischen denen die Behälter passieren können,
dadurch gekennzeichnet, daß er darüber hinaus Mittel aufweist, die es gestatten, zwischen den Führungskanal und jede Seitenwand einen über die ganze Länge dieses Kanals gleichförmigen Luftstrom oder mehrere Luftströme (15), die über die ganze Länge dieses Kanals verteiltsind, einzublasen, und dadurch, daß jeder Luftstrom oder -strahl (15) auf die am nächsten gelegene Seitenwand (9) gerichtet ist, um eine Ablenkung der aufsteigenden Luft (13) zu erhalten, welche durch den Betrieb der Transportmittel hervorgerufen wird.

2. Förderer nach Anspruch 1, dadurch gekennzeichnet, daß das Einblasen von Luft zur Ablenkung der hervorgerufenen aufsteigenden Luft in einer Richtung erfolgt, die im wesentlichen orthogonal zu jeder Seitenwand ist.

3. Förderer nach Anspruch 1 oder 2, dadurch gekennzeichnet, daß er darüber hinaus zwischen dem Führungskanal und jeder Seitenwand einen Deflektor (12) aufweist, der sich über die gesamte Länge des Förderers erstreckt und bezüglich der vertikalen geneigt ist, so daß er mit der am nächsten gelegenen Seitenwand (9) einen Durchgang festlegt, der sich nach oben hin erweitert.

4. Förderer nach einem der Ansprüche 1 bis 3, dadurch gekennzeichnet, daß der Luftstrom, der von den Mitteln des Transports der Behälter durch Luftstrahlen verwendet wird, und der Luftstrom, der für die Ablenkung der hervorgerufenen aufsteigenden Luft verwendet wird, unabhängig voneinander erzeugt werden.

5. Förderer nach einem der Ansprüche 1 bis 3, dessen Mittel des Transports durch Luftstrahlen aus einem Blasbehälter (4) bestehen, in den Luft eingeblasen wird und dessen untere Wand (5) eine Ausbuchtung nach innen (6) umfaßt, die den Führungskanal begrenzt, und der mit Mitteln (7) zum Führen der Behälter (1) über eine Ausstülpung (2) ihres Halses (3) versehen ist und an der Ausbuchtung nach innen (6) Öffnungen (8) besitzt, die es erlauben, die in den Blasbehälter eingeblasene Luft in Transportrichtung auf die Behälter zu richten, dadurch gekennzeichnet, daß die untere Wand (5) dieses Blasbehälters (4) darüber hinaus auf beiden Seiten ihrer Ausbuchtung nach innen (6) einen länglichen Schlitz oder mehrere Öffnungen (10) aufweist, die ausgelegt sind, einen Teil der in den Blasbehälter (4) eingeblasenen Luft zu entnehmen und auf die am nächsten gelegene Seitenwand (9) zu richten.

6. Förderer nach einem der Ansprüche 1 bis 5, dadurch gekennzeichnet, daß der Abstand d zwischen den beiden Seitenwänden (9) größer als 250 mm ist und vorzugsweise in der Größenordnung von 450 mm liegt.
